(19) Europäisches Patentamt
European Patent Office
Office européen des brevets

(11) Numéro de publication : 0 143 037 B2

(12) # NOUVEAU FASCICULE DE BREVET EUROPEEN

(45) Date de publication du nouveau fascicule du brevet : **26.01.94 Bulletin 94/04**

(51) Int. Cl.$^5$ : **C08G 69/48**

(21) Numéro de dépôt : **84402163.4**

(22) Date de dépôt : **26.10.84**

(54) **Nouveaux macromères polyamides insaturés, leurs préparation et applications.**

(30) Priorité : **04.11.83 FR 8317523**

(43) Date de publication de la demande : **29.05.85 Bulletin 85/22**

(45) Mention de la délivrance du brevet : **15.02.89 Bulletin 89/07**

(45) Mention de la décision concernant l'opposition : **26.01.94 Bulletin 94/04**

(84) Etats contractants désignés : **BE CH DE GB IT LI NL**

(56) Documents cités :
**DE-A- 1 917 798**
**DE-A- 2 452 109**
**JP-A-76 125 016**
**US-A- 3 483 104**

(56) Documents cités :
**US-A- 4 402 879**
**Chemical Abstract, vol. 87, no.4, 25 July 1977, p. 30, no. 24150w**
**Europ. Pol. J. 13, 1977, pp. 337-342**
**J. Pol. Sci.-Pol.Chem. Ed. 13, 1975, pp. 961-972**
**Coat. Plast. Prep. 34, 1974, pp. 162-172**

(73) Titulaire : **ELF ATOCHEM S.A.**
**4 & 8, Cours Michelet La Défense 10**
**F-92800 Puteaux (FR)**

(72) Inventeur : **Blondel, Philippe**
**Cote Saint-Michel Residence Le Mont Joli No.2**
**F-27300 Bernay (FR)**
Inventeur : **Jungblut, Camille**
**Les Mollands Saint-Leger des Rostes**
**F-27300 Bernay (FR)**

(74) Mandataire : **Eggert, Hans-Gunther, Dr.**
**Räderscheidtstrasse 1**
**D-50935 Köln (DE)**

EP 0 143 037 B2

## Description

La présente invention se rapporte à la fabrication de nouveaux macromères polyamides insaturés; elle concerne notamment des chaînes de longueur limitée de polyamide, se terminant à une de leurs extrémités par un motif renfermant au moins une double liaison. L'invention comprend également un procédé pour la production de ces macromères, ainsi que les applications de ceux-ci.

Il apparait que la technique antérieure ne se soit pas intéressée à des macromères polyamides portant un groupe non saturé à une seule de ses extrémités de chaîne; et pourtant de tels produits peuvent servir utilement à la préparation de polymères aux propriétés particulières, convenant à certains usages spéciaux. Par contre, on trouve dans la littérature technique des indications sur des oligomères, polyesters et polyamides, comportant un groupement non saturé à chacune des deux extrémités de la chaîne (brevet US-3 483 104 et japonais 51-125 017); leur préparation, selon l'art antérieur, s'effectue le plus souvent en solution, ou utilise un chlorure d'acide ou anhydride d'acide insaturé. Ce procédé est peu économique et les oligomères de l'art antérieur, ainsi préparés, présentent des basses masses moléculaires, qui limitent leurs applications. Dans Chemical Abstract, vol. 87 n° 4, 25 Juillet 1977, page 30 n° 24150w - JP-A-76 125 016, est décrit un télomère de polyamide réalisé en deux étapes, d'abord chauffage d'un précurseur de polyamide avec un acide dicarboxylique saturé ou l'anhydride correspondant, en présence d'eau, ensuite réaction du produit résultant avec un acrylate de façon à obtenir un télomère possédant une insaturation à chacune des deux extrémités de la chaîne. Ce procédé présente les mêmes inconvénients que ceux cités précédemment et conduit finalement à un télomère infusible.

La présente invention comble l'insuffisance, notée ci-dessus, de la technique antèrieure: elle permet de préparer économiquement, sans solvant, et sans chlorure ni anhydride d'acide, en milieu fondu, des macromères de polyamide pouvant porter un groupement insaturé à une seule des extrémités de leur chaîne polymérique. L'invention apporte ainsi à l'industrie des produits nouveaux, utiles notamment comme matières à mouler thermodurcissables, additifs pour poudres de polyamide, résines d'imprégnation etc. Les macromères, suivant l'invention, conviennent en particulier à la préparation d'intéressantes matières thermoplastiques par greffage de ces macromères sur des oléfines ou copolyoléfines.

Le nouveau procédé, suivant l'invention, est caractérisé en ce que 2 à 120 moles d'omégaaminoacide ou de lactame et une mole d'un composé insaturé de formule $R^1R^2C=CR^3X$ où les groupes ou atomes $R^1$ à $R^3$, semblables ou différents sont H, halogène, alkyle ou aryle (en particulier phényle), norbornyle, thiényle, pyrrolyle ou furanyle, X étant : $-(CH_2)_nCOOH$ avec n=0 à 17 ;

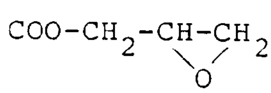 ;

$Y-C_6H_4-COOR$ où Y est -COO-, -CONH- ou n'existe pas, R étant H,alkyle ou aryle ; $-CH_2OH$ ; $-(CH_2)_mNH_2$ avec m=0 à 18 ; ou bien OH,
ou de formule

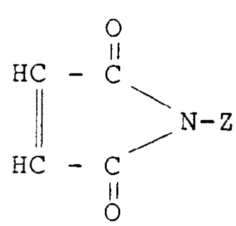

où Z désigne un groupe $(CH_2)_m$-COOR ou $-C_6H_4$-COOR, R étant un alkyle, aryle ou H, et m' un nombre entier de 1 à 17,
ou de formule

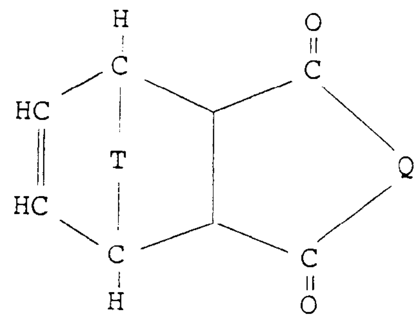

dans laquelle :

T, quand il existe, représente $-CH_2-$

Q représente l'oxygène ou un groupement $>N-C_6H_4-COOR$ ou $>N-(CH_2)_m-COOR$, R étant l'hydrogène ou un groupement alkyle ou aryle, avec m 1 à 17,

sont chauffées à l'état fondu à une température supérieure à celle à laquelle fond le produits de polycondensation voulu, et comprise entre 200°C et 300°C, sous atmosphère de gaz inerte, pendant une durée de 0,5 à 10 heures.

Les températures, appliquées dans ce procédé, sont de 200° à 300°C, de préférence 210° à 280°C.

En tant que composé insaturé, il est particulièrement recommandable d'employer un acide mono-insaturé qui joue le rôle de régulateur de chaîne, en bloquant dès le départ une partie des groupements amine.

Pour l'exécution du procédé, on utilise 1 mole de composé insaturé, porteur d'un groupe actif, pour 2 à 120 moles d'oméga amino-acide ou de lactame. Le plus souvent, cette proportion est de 1 mole du premier pour 4 à 50 moles du second.

Comme dans la technique habituelle des polyamides, le mélange chauffé est maintenu dans une atmosphère de gaz inerte, notamment d'azote. Le chauffage dure de 0,5 à 10 heures et plus souvent 1 à 6 heures, de préférence avec agitation.

Le précurseur de polyamide, c'est-à-dire le monomère susceptible de subir la polycondensation en polyamide ou copolyamide, utilisé dans le procédé de l'invention, est constitué par un ou plusieurs oméga-amino acides, lactames, sels de diacides avec diamines ou des mélanges de diacides avec diamines. Ainsi peut-on employer les composés couramment utilisés dans la fabrication de polyamides, par exemple: caprolactame, lauryl-lactame, acide amino-caproïque, cenantholactame, acides amino-7 heptanoïque, amino-11 undécanoïque, amino-12 dodécanoïque; mélanges ou sels se diamines telles qu'hexaméthylène diamine, nonaméthylène diamine, undécaméthylène diamine, dodécaméthylène diamine, métaxylylène diamine, bis-p.amino-cyclohexylméthane, etc. avec des diacides comme téréphtalique, isophtalique, adipique, azélaïque, sébacique, dodécane, dicarboxylique, glutarique etc. Ces amines ou/et acides peuvent, bien entendu, porter des substituants connus dans l'art.

Les composés insaturés appartiennent aux composés organiques de formules (1), (2) et (3) :

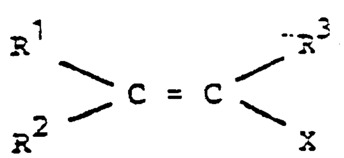 ........ (1)

ou les groupes ou atomes $R^1$, $R^2$ et $R^3$, semblables ou différents, sont: H, halogène, alkyle, aryle (en particulier phényle), norbornyle, thiényle, pyrrolyle ou furanyle, tandis que le groupe actif X peut être:

$-(CH_2)_nCOOH$ avec n = 0 à 17;

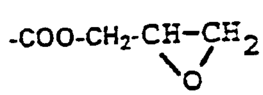 ;

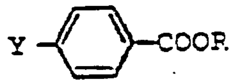

Y étant -COO-, -CONH- ou peut ne pas exister, R étant H, alkyle ou aryle;
$-CH_2OH$; $-(CH_2)_mNH_2$ avec m = 0 à 18; -OH.

Ainsi, des exemples particulièrement favorables des composés selon formule (1) sont-ils: acides ou esters des acides non saturés, acrylique, méthacrylique, cinnamique, crotonique, vinylacétique, undécylénique, 5'-norbornène-2 acrylique, 3'-furanyl-2 acrylique, 3'-pyrrolyl-2 acrylique, N-allyl aminobenzoïque, N-acryloyl aminobenzoïque, N-méthacryloyl aminobenzoïque, acryloyl oxybenzoïque et méthacryloyl oxybenzoïque.

Un autre type de composés insaturés, convenant au procédé suivant l'invention, peuvent être représentés par la formule

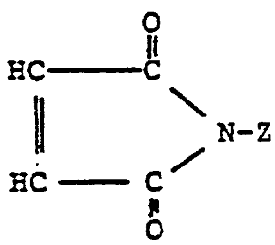 .................... (2)

Z désignant un groupe $-(CH_2)_{m'}-COOR$
ou

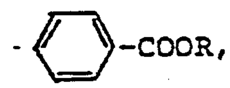

dans lequel R est un alkyle, un aryle ou
H et m' un nombre entier de 1 à 17. Des exemples de tels composés sont les acides et les esters N-maléimido: hexanoïques, p.benzoïques, undécanoïques, dodécanoïques, etc.

On peut également employer, en tant que composé insaturé, un corps bi- ou tricyclique du type

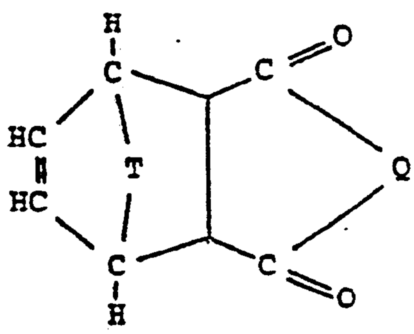 .......... (3)

T désigne ici $-CH_2-$, mais peut ne pas exister, auquel cas le composé comprend seulement deux cycles. Q est -O-, $>N-C_6H_4-COOR$ ou $>N-(CH_2)_{m'}-COOR$, R étant l'hydrogène, alkyle ou aryle et m' = 1 à 17. A titre d'exemples non limitatifs de ces composés, on peut citer les anhydrides et les imides dérivés des anhydrides tels que tétrahydrophtalique, p.N-maléimido benzoïque, p[endo-cis-bicyclo(2,2,1)-5 heptène-2,3 dicarboxylique].

Bien que l'invention ne soit pas limitée par un mécanisme des réactions impliquées, quelques uns de ses aspects peuvent être illustrés par les schémas réactionnels suivants.

En chauffant n moles d'un oméga-amino acide $NH_2-A-COOH$ avec 1 mole d'un acide éthylénique RCH = CHR'COOH, on obtient un macromère:

$$RCH{=}CHR'CO{-}\left[NH{-}A{-}CO\right]_n{-}OH \qquad I$$

dont un bout de chaîne porte le groupe insaturé RCH = CH ... de l'acide employé.

De façon analogue, l'invention peut être mise en oeuvre par l'emploi d'une amine non saturée RCH = CHR'-$NH_2$, qui conduit à un macromère insaturé à une de ses extrémités:

$$H{-}\left[NH{-}A{-}CO\right]_n{-}NH{-}R'CH{=}CHR \qquad III$$

Bien que la terminaison des chaînes, illustrées par les formules I et III, comporte une seule double liaison, elle peut en posséder plusieurs.

Ainsi, le macromère insaturé, suivant l'invention, comprenant une chaîne de polyamide, terminée par un autre groupement, est caractérisé en ce qu'au moins une double liaison se trouve dans un groupement lié à une seule des extrémités de la chaîne polyamidique.

Ce qui précède donne une idée de la structure des macromères insaturés suivant l'invention. On a déjà noté plus haut que ces polymères comportent 2 à 120 unités amidiques, provenant d'un oméga-amino acide ou de lactame pour 1 d'un composé insaturé. Les masses moléculaires moyennes, en nombre, de ces macromères s'échelonnent entre 185 et 20 000 dans les cas de la mono-insaturation. Les masses moléculaires les plus courantes s'échelonnent entre environ 500 et 10 000. Les produits se présentent le plus souvent sous la forme de solides blancs, plus ou moins friables suivant leur masse moléculaire.

Il est bien entendu que la chaîne de polyamide, dans ces produits, peut être formée par un copolymère ou/et par des unités polyamidiques porteuses de substitutions.

La plupart des macromères suivant l'invention fondent entre 130° et 250°C, et surtout entre 150° et 200°C.

Par réticulation des macromères suivant l'invention, il est possible d'obtenir des masses utiles à différents usages, par exemple des objets moulés, des revêtements, joints d'étanchéité ou autres. La réticulation peut s'effectuer sous l'effet de générateurs de radicaux libres, notamment des peroxydes organiques ou des diazoïques à température de l'ordre de 180° à 300°C ou plus. D'autre part, la réticulation peut se faire par radiations, en particulier par l'ultra-violet; ce mode de durcissement convient sur tout aux macromères suivant l'invention, dans lesquels le groupe insaturé appartient à des dérivés des acides tels que cinnamique, acrylique ou méthacrylique.

Une application particulière des nouveaux macromères consiste à les fixer, par une réaction de greffage, sur différents polymères thermoplastiques. On obtient ainsi différents polymères nouveaux. La réaction entre le macromère de polyamide insaturé, suivant l'invention, et le polymère ou copolymère thermoplastique, éventuellement élastomère, peut être produite sous l'effet de différents catalyseurs de polymérisation connus et sous l'action de la chaleur. En particulier, des générateurs de radicaux libres, tels que peroxydes organiques ou composés azoïques, conviennent à cet effet.

Cette réaction de greffage s'applique à différents polymères "troncs", notamment aux produits de polymérisation obtenus à partir d'un monomère comme l'éthylène, propylène, monomères vinyliques, tels qu'acétate de vinyle, chlorure de vinyle, styrène ou butadiène. Conviennent également les produits de polymérisation de deux ou trois monomères, par exemple éthylène/propylène, éthylène/acétate de vinyle, éthylène/acrylate ou méthacrylate de glycidyle, éthylène/acétate de vinyle/chlorure de vinyle, éthylène/hydroxyméthacrylate, éthylène/acétate de vinyle/anhydride maléïque ou éthylène/acétate de vinyle/acide acrylique, particulièrememt, le poly(éthylène-co-acétate de vinyle) ou EVA contenant 14 % à 28 % d'acétate de vinyle. On peut aussi utiliser comme "troncs" les produits de polymérisation de deux monomères sur lesquels a été greffé un troisième monomère du type acide $\alpha$ ou $\beta$ insaturé, par exemple éthylène-acétate de vinyle/anhydre maléïque, éthylène-acétate de vinyle/acide acrylique ou méthacrylique ou maléïque, éthylène-acétate de vinyle/méthacrylate ou acrylate de glycidyle.

Les polymères troncs utilisés ont de préférence des masses moléculaires en nombre entre 5 000 et 300 000. Dans le cas des poly(éthylène-co-acétate vinyle) il est bon de choisir préférentiellement des masses moléculaires en nombre situées entre 10 000 et 30 000.

Les macromères utilisés comme "greffons", dans cette application, peuvent être les différents polyamides copolyamides ou des terpolyamides décrits plus haut. Conviennent bien, notamment, les macromères préparés à partir des oligomères polyamides 6, 11 ou 12, des copolyamides 6/6, 6/10, 6/11, 6/12, 11/12 ou du terpolyamide 6/11/12.

La réaction de greffage entre le macromère et le polymère tronc s'effectue par chauffage d'un mélange

fondu des deux constituants dans les proportions désirées. Elle a lieu de préférence entre 160° et 300°C et surtout entre 190° et 250°C. Les températures voisines ou peu supérieures à la température de fusion du macromère sont préférées. Le greffage peut s'effectuer dans une extrudeuse ou dans un réacteur métallique agité.

D'autres moyens connus peuvent être employés, comme le mélangeur Brabender. La réaction de greffage peut être suivie dans la cuve d'un plastographe Brabender par l'évolution du couple; celui-ci passe toujours par un maximum, lorsque le taux de greffé est maximum.

Les nouveaux composés thermoplastiques, ainsi obtenus, peuvent être utilisés dans de nombreux domaines notamment comme adhésifs; comme matières injectables ou extrudables ayant de bonnes propriétés mécaniques et de souplesse intéressante en tant qu'additifs ou plastifiants de polyamides. Lorsque la teneur pondérale du macromère polyamide, greffé sur le polymère tronc, est comprise entre 1 % et 30 %, plus précisément entre 1 % et 10 %, le thermoplastique formé possède des propriétés adhésives améliorées. En particulier les copolymères greffés, dont le tronc est constitué par du poly(éthylène-co-acétate de vinyle) et les greffons par du polyamide 11 monoacrylate, avec des masses moléculaires en nombre comprises entre 255 et 2 000 et de teneurs pondérales situées entre 1 % et 10 %, présentent de bonnes propriétes adhésives comparativement au poly(éthylène-co-acétate de vinyle) seul. Ces résines trouvent leurs utilités dans le collage des feuilles, films ou plaques de nombreux matériaux tels que polymères, métaux, verre, bois et tissus.

Lorsque la teneur pondérale du macromère polyamide, greffé sur le polymére tronc, est comprise entre 70 % et 95 % et sa masse moléculaire moyenne en nombre supérieure à 8 000, le thermoplastique présente par rapport au polyamide seul des propriétés mécaniques et de souplesses intéressantes. Ces thermoplastiques peuvent également être utilisés comme additifs des polyamides. Ils jouent le rôle d'émulsificateur car ils se mélangent bien aux polyamides en donnant des produits homogénes pouvant facilement être injectés ou moulés et ne présentant pas de délaminage. Cette facilité d'homogénéisation est due aux greffons polyamides du polymère tronc.

Lorsqu'on mélange un polyamide avec le composé greffé et que la teneur en polymère tronc est comprise entre 2 % et 50 % et particulièrement entre 5 % et 20 % dans le cas du poly(éthylène-co-acétate de vinyle) à 28 **%** d'acétate de vinyle, les thermoplastiques présentent alors des propriétés améliorées de souplesse et de résistance au choc, même à basse température.

Lorsqu'on effectue la polycondensation de l'acide amino 11-undécanoïque en présence du copolymère greffé et que la teneur en polymère tronc est comprise entre 2 % et 50 % et particulièrement entre 5 % et 20 **%**, dans le cas du poly(éthylène-co-acétate de vinyle) à 28 % d'acétate de vinyle, les thermoplastiques présentent également des propriétés améliorées de souplesse et de résistance au choc à basse température. Le greffon polyamide, qui porte à son extrémité un groupement fonctionnel amine ou carboxylique, présente une double propriété: d'une part il sert de régulateur de chaîne en limitant la longueur des chaînes polyamides qui se fixent sur les groupements terminaux $-NH_2$ ou -COOH du copolymère greffé, d'autre part il joue le rôle d'agent compatibilisant pour les autres chaînes polyamides non fixées. Les produits obtenus sont homogènes et ne présentent pas de phénomène de délaminage pendant leurs transformations ultérieures (injection, moulage). Un tel produit est obtenu dans l'exemple 11 plus loin.

Un avantage des polymères suivant l'invention, par rapport à des polyamides plastifiés, est qu'il n'y a pas de produits volatils qui se dégagent pendant les différentes transformations, pas d'odeur et pas d'exsudation à la longue.

L'invention est illustrée par les exemples non limitatifs qui suivent.

**Exemple 1**

Préparation d'un macromère mono-insaturé à base de polyamide 11.

On opére dans un réacteur métallique de 2 litres de capacité, à trois tubulures: entrée de gaz, communication avec un système de distillation comprenant un condenseur relié à un récepteur de distillat, ainsi qu'un agitateur à ancre.

Dans ce réacteur on introduit:

600 g, soit 2,985 mol d'acide amino-11 undécanoïque $NH_2-(CH_2)_{10}-COOH$ et

51,34 g c'est-à-dire 0,597 mol d'acide crotonique, $CH_3CH = CH-COOH$

ce qui correspond à 1 mole d'acide insaturé pour 5 moles d'oméga-amino acide.

Le réacteur est purgé à l'azote, puis chauffé jusqu'à 210°C en 40 minutes, toutes vannes fermées; la pression atteint 5 bars.

Le contenu du réacteur est alors décomprimé, et l'on continue à chauffer à 210°C durant 4 heures, avec une agitation de 60 tours/mn, en y faisant passer un courant d'azote de 30 l/h, Un vide de 0,3 à 0,5 mbar est ensuite appliqué pendant 1 heure, pour terminer la réaction. Le macromère est soutiré du réacteur, dans un

bac d'eau, pour éviter son oxydation à l'air; il est séparé et séché à l'étuve, sous vide à 50°C pendant 14 heures. On détermine sa masse moléculaire moyenne ($\overline{M}$) d'une part, par dosage des -COOH terminaux [désignée $\overline{M}$(COOH)] d'après la méthode de J.E. WALTZ et G.B. TAYLOR (Anal. Chem. 19, 7, 1947), et - d'autre part - par viscosimétrie [$\overline{M}$n(η)]. La température de fusion est déterminée par la méthode DSC.

On trouve ainsi:

$\overline{M}$n(COOH) = 1180
$\overline{M}$n(η) = 1210
Tf = 166°C

**Exemple 2**

Différents macromères mono-insaturés.

Les opérations de l'exemple 1 sont répétées avec successivement 7 composés organiques, comportant un groupement carboxylique à l'une de leurs extrémités et un groupement insaturé à l'autre toujours avec 1 mole d'acide non saturé pour 5 moles d'amino-11 undécanoïque. Le tableau 1 indique les valeurs des masses moléculaires et des températures de fusion des macromères ainsi synthétisés.

**Tableau 1**

| Composé insaturé | Tf(°C) | $\overline{M}$n(COOH) | $\overline{M}$n(η) |
|---|---|---|---|
| Acide cinnamique | 171 | 1130 | 1240 |
| Acide crotonique | 166 | 1180 | 1210 |
| Acide méthacrylique | 166 | 1000 | 1220 |
| Acide undécylénique | 165,5 | 1010 | 1080 |
| Anhydride tétrahydrophtalique | 166 | 1150 | 1200 |
| Anhydride endo-cis-bicyclo [2,2,1]hept-5-ène-2,3-di-carboxylique ou nadique | 157 | 940 | 1000 |

Les températures de fusion sont déterminées par la méthode DSC.

**Exemple 3**

Macromère mono-insaturé à faible insaturation.

On répète l'exemple 1 avec 600 g (2,985 moles) d'acide amino-11 undécanoïque et seulement 5,5 g (0,064 mole) d'acide crotonique, soit 1 mole de celui-ci pour 46,6 moles d'amino-acide. On obtient un solide blanc, dur. La viscosité intrinsèque dans le m.crésol à 25°C est 0,72.

$\overline{M}$n(η) = 8600.

**Exemple 4**

Macromère mono-insaturé à partir du lauryllactame.

Dans le réacteur de l'exemple 1 on introduit du lauryl-lactame, 492,5 g (2,48 moles), de l'acide crotonique, 48 g (0,56 mole), soit 1 mole de cet acide pour 4,43 moles de lactame, ainsi que de l'eau, 50 g (= 2,8 mol), c'est-à-dire 10 % en poids. Après avoir purgé le réacteur à l'azote, toutes les vannes sont fermées. Le réacteur est alors chauffé à 270°C pendant 2 heures sous agitation et la pression atteint 27 bars. L'acide crotonique joue ici un double rôle: il catalyse l'ouverture du cycle lactamique, et, d'autre part sert de régulateur de chaîne. Le réacteur est ensuite détendu pendant 45 minutes puis la réaction est continuée pendant encore 2 heures sous un courant d'azote.

$\overline{M}$n(COOH) = 1120.

**Exemple 5**

Comme précédemment, on polymérise 904 g d'ε-caprolactame en présence de 72 g d'acide acrylique à 200°C pendant 10 heures. L'oligomère obtenu possède une masse moléculaire moyenne en nombre de 900 et 75 % des chaînes contiennent le groupement acrylate terminal.

**Application des macromères suivant exemples 1 à 5 à la préparation de thermoplastiques nouveaux par greffage.**

**Exemple 6**

On homogénéise par rotation dans un tonneau les matières suivantes:

| | |
|---|---|
| **poly(éthylène-co-acétate de vinyle) à 28 % d'acétate de vinyle; indice de fusion ("Melt-Index" = 5 à 7 à 190°C)** | **9600 g** |
| **macromère monoacrylate du polyamide 11 contenant 5 motifs d'amino-acide par groupe acrylique, de masse moléculaire moyenne en nombre 1500** | **400 g** |
| **peroxyde de ditertiobutyle** | **200 ppm** |

Le mélange des constituants est effectué dans une extrudeuse à double étage selon les conditions opératoires suivantes:

| | |
|---|---|
| Vitesse de rotation (t/mn): | |
| 1ère vis L/D = 18 | 100 |
| 2ème vis L/D = 13 | 115 |
| Température affichée (°C): | |
| Entrée | 50 |
| 1er étage | 190 |
| 2ème étage | 190 |
| sortie | 220 |
| Débit (kg/h): | 36 |

Le produit sort sous la forme d'un jonc, souple, facilement granulable, soluble dans les chloroforme. benzène, toluène, ou trichloréthylène.

**Exemple 7**

On homogénéise dans un tonneau rotatif dans les proportions suivantes:

| | |
|---|---|
| **polyéthylène-co-acétate de vinyle** | **96 parties en poids** |
| **macromère crotonate du polyamide 11 à 7 motifs d'amino-acide par groupe crotonique, de masse moléculaire moyenne en nombre voisine de 1100** | **4 parties en poids** |
| **péroxyde de ditertiobutyle** | **200 ppm** |

Le mélange est extrudé dans une extrudeuse monovis à 1 étage selon les conditions opératoires suivantes:

| | |
|---|---|
| Vitesse de rotation (t/mn): | 150 |
| Température (°C): | |
| Entrée | 200 |
| milieu | 185 |
| sortie | 220 |
| Débit (kg/h): | 10 |

Les mêmes opérations ont été effectuées avec chacun des six macromères suivants, à base de polyamide-11 (également 4 parties pour 96 d'EVA):

| | |
|---|---|
| **mono-acrylate** | **$\bar{M}n$ = 1500** |
| **mono-méthacrylate** | **$\bar{M}n$ = 1000** |
| **mono-crotonate** | **$\bar{M}n$ = 1120** |
| **mono-undécylénate** | **$\bar{M}n$ = 1010** |
| **mono-cinnamate** | **$\bar{M}n$ = 1130** |
| **mono-nadate** | **$\bar{M}n$ = 940** |
| **et de mono-acrylate de polyamide 6** | **$\bar{M}n$ = 900** |

Ce sont tous des produits souples que l'on peut granuler.

**Exemple 8**

Dans un réacteur en verre de 1 litre dont le couvercle comporte 3 sorties, une entrée et une sortie de gaz, une agitation, on introduit:

192 g de poly(éthyléne-co-acétate de vinyle)
8 g de macromère polyamide 11 monoacrylate ($\overline{M}n \simeq 1500$)
0,4 g de peroxyde de dicumyle.

Après avoir été purgé à l'azote, le réacteur est placé dans un bain d'huile à 200°C et on agite sous azote pendant 20 minutes. Après refroidissement sous azote le produit est broyé.

**Mélange du nouveau thermoplastique avec un polyamide en extrudeuse**

**Exemple 9**

On homogénéise, dans un tonneau, 1000 g du composé de l'exemple 6 avec 9 000 g d'un polyamide 11 industriel de masse moléculaire $\overline{M}n = 16000$, vendu dans le commerce sous la dénomination BMNO. L'ensemble est passé par une extrudeuse à double vis selon les conditions de l'exemple 6. On obtient un produit blanc en joncs facilement granulables.

**Exemple 10**

Dans un réacteur métallique agité, contenant 100 g du composé préparé dans l'exemple 6 et 900 g d'acide amino-11 undécanoïque, on effectue la polycondensation selon les conditions de l'exemple 1. Le produit obtenu est blanc, homogène.

**Exemple 11**

Mesure de l'adhésivité

Les forces de pelage sont évaluées suivant la norme ASTM D 1876. Le collage se fait sur feuilles d'aluminium (e = 100 microns) de 2 cm de large et le scellement est effectué pendant 5 minutes sous 4 bars généralement à 200°C. La force de pelage est mesurée au moyen d'un dynamomètre avec une vitesse d'arrachement de 50 mm/mm, étirage en T.

La force de pelage du produit de l'exemple 6 est comparée dans le tableau ci-après à celle du poly(éthylène-co-acétate de vinyle) seul ou contenant 0,35 % d'anhydride maléique. La force de pelage est améliorée par un facteur 13 aux températures situées entre 20°C et 60°C.

| | Force de pelage (daN/cm) | |
|---|---|---|
| | 20°C | 60°C |
| **Copolymère éthylène-acétate de vinyle (72 %/28 %)** | 0,25 | 0,22 |
| **Terpolymère éthylène-acétate de vinyle-anhydride maléique (71,65 S%/28 %/0,35%)** | 1,79 | 1,83 |
| **Produit composé de l'exemple 6** | 3,38 | 2,94 |

**Exemple 12**

La série des nouveaux thermoplastiques, préparés selon l'exemple 7 et obtenus à partir de macromères dérivés du polyamide 11 et des acides insaturés, autres que l'acide acrylique, ont été essayés. La comparaison avec le poly(éthylène-co-acétate de vinyle) (EVA) non greffé est rapportée dans le tableau ci-après. Dans tous les cas la force de pelage est améliorée très sensiblement par rapport au témoin.

| Substrat aluminium/aluminium | Force de pelage (daN/cm) à 20°C |
|---|---|
| acrylate du PA 11 | 3,38 |
| crotonate du PA 11 | 1,75 |
| cinnamate du PA 11 | 1,25 |
| méthacrylate du PA 11 | 2,70 |
| undécylinate du PA 11 | 1,90 |
| EVA seul (témoin) | 0,25 |

**Exemple 13**

Le composé de l'exemple 6 ayant été utilisé pour faire des collages d'aluminium sur divers substrats tels que verre, acier, bois ou tissus, matières plastiques, on a mesuré les forces de pelage de ces assemblages.

| Substrats | Tempé-rature | pression (bars) | temps (s) | Force de pelage à 20°C (daN/cm) |
|---|---|---|---|---|
| Alu/Acier | 200 | 4 | 300 | 4,25 |
| Alu/Bois | 200 | 4 | 60 | 3,25 |
| Alu/Verre | 180 | 2 | 300 | 5,75 |
| Alu/Verre | 180 | 2 | 60 | 3,13 |
| Alu/PA 11 | 120 | 4 | 300 | 0,15 |
| Alu/PA6 | 120 | 4 | 300 | 2,25 |
| Alu/PA12 | 120 | 4 | 300 | 0,90 |
| Alu/PE | 120 | 4 | 300 | 0,25 |
| Alu/PEbd | 90 | 4 | 120 | 0,15 |
| Alu/PVC rigide | 90 | 4 | 120 | 0,88 |
| Alu/PVC souple | 90 | 4 | 120 | 0,88 |
| Alu/Pb | 90 | 4 | 120 | 1,38 |
| Alu/Tissus PA | 160 | 4 | 30 | 1,13 |
| Alu/Tissus coton | 160 | 4 | 30 | 1,81 |
| Tissus PA/PA | 160 | 4 | 30 | 0,85 |
| Tissus coton/coton | 160 | 4 | 30 | 1,88 |

**Exemples 14 à 16**

Des propriétés mécaniques de quelques uns des copolymères greffés suivant l'invention ont été déterminées par des méthodes normalisées. Elles sont réunies au tableau ci-après. Dans celui-ci les abréviations suivantes sont utilisées.

HDT - température de fléchissement sous 4,6 bars
CR - contrainte à la rupture, en daN/mm$^{-2}$
AL - allongement à la rupture, %
MOD - module de rigidité en torsion, en daN/cm$^{-2}$ (selon CLASH et BERG)
CHOC: SE - essai au choc, sans entaille (+20°C -40°C)
AE - essai au choc, avec entaille (+20°C et 40°C)
MI - Indice de fusion ("Melt Index")

L'indication NC signifie "non casssé".

Voir tableau à la page suivante.

Ces résultats montrent que la souplesse du polyamide est améliorée par le greffage des macromères suivant l'invention. Il en est de même de la résistance au choc avec entaille.

| Ex. N° | Polymère | | HDT | CR | AL | MOD | SE +20 | SE -40 | AE +20 | AE -40 | MI: |
|---|---|---|---|---|---|---|---|---|---|---|---|
| 14 | de l'exemple 10 : % d'acide amino-11 undécanoïque | 95 % | 107 | 5,6 | 319 | 3250 | NC | NC | NC | 8,4 | 242 |
| | | 90 % | 90 | 5,8 | 343 | 3050 | NC | NC | NC | 8,4 | 285 |
| | | 85 % | 76 | 5,3 | 380 | 2750 | NC | NC | NC | 10.3 | 342 |
| | | 80 % | 73 | 4,8 | 388 | 2350 | NC | NC | NC | 6 | 1730 |
| 15 | de l'exemple 9 90 % BMNO ($\bar{M}n$ = 16 000) | | 74 | 4,9 | 266 | 2370 | NC | NC | NC | 8,1 | - |
| 16 | témoin: BMNO seul ($\bar{M}n$ = 16 000) | | 125 | 5,7 | 350 | 3300 | NC | NC | 20 | 10 | - |

## Revendications

1. Macromère, comprenant une chaîne de polyamide terminée par un autre groupement, caractérisé en ce qu' une double liaison se trouve dans un groupement lié à une seule des extrémités de la chaîne polyamidique, ce groupement provenant d'un composé insaturé du type

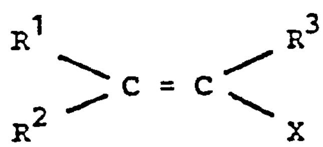

(1)

ou les groupes ou atomes $R^1$, $R^2$ et $R^3$, semblables ou différents, sont : H, halogène, alkyle, aryle (en particulier phényle), norbornyle, thiényle, pyrrolyle ou furanyle, tandis que le groupe actif X peut-être : $-(CH_2)_nCOOH$ avec n=0 à 17 ;

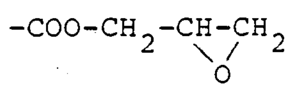 ;

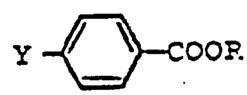

Y étant -COO-, -CONH- ou peut ne pas exister, R étant H, alkyle ou aryle ;
$-CH_2OH$ ; $-(CH_2)_mNH_2$ avec m=0 à 18 ; -OH.
ou

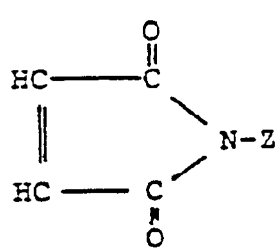

(2)

Z désignant un groupe $-(CH_2)_{m'}-COOR$
ou

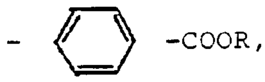

dans lequel R est un alkyle, un aryle ou H et m' un nombre entier de 1 à 17 ;
ou

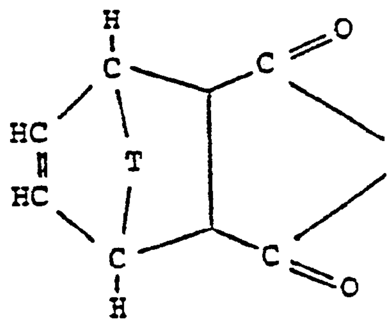

(3)

T désigne ici $-CH_2-$, mais peut ne pas exister, auquel cas le composé comprend seulement deux cycles.
Q est -O-, $>N-C_6H_4-COOR$ ou $>N-(CH_2)_{m'}-COOR$, R étant l'hydrogène, alkyle ou aryle et m'= 1 à 17 ;
et en ce que sa masse moléculaire moyenne en nombre est de 185 à 20000, à l'exception des composés de formule :

$$CH_2 = CHCO[NH(CH_2)_8CO]_n\ OH$$

avec n, un nombre entier jusqu'à 14.

2. Macromère suivant la revendication 1, caractérisé en ce qu'il comporte 2 à 120 motifs provenant d'un oméga amino-acide par double liaison présente.

3. Macromère suivant la revendication 1, caractérisé en ce que sa masse moléculaire moyenne en nombre est de 500 à 10000.

4. Macromère suivant une des revendications 1 à 3, caractérisé en ce que sa température de fusion est comprise entre 130° et 250°C, et surtout entre 150° et 200°C.

5. Procédé de préparation d'un macromère suivant une des revendications précédentes, caractérisé en ce que 2 à 120 moles d'omégaaminoacide ou de lactame et une mole d'un composé insaturé de formule $R^1R^2C=CR^3X$ où les groupes ou atomes $R^1$ à $R^3$, semblables ou différents sont H, halogène, alkyle ou aryle (en particulier phényle), norbornyle, thiényle, pyrrolyle ou furanyle, X étant : $-(CH_2)_nCOOH$ avec n=0 à 17 ;

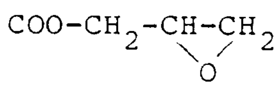 ;

$Y-C_6H_4-COOR$ où Y est -COO-, -CONH- ou n'existe pas, R étant H,alkyle ou aryle ; $-CH_2OH$ ;
$-(CH_2)_mNH_2$ avec m=0 à 18 ; ou bien OH,
ou de formule

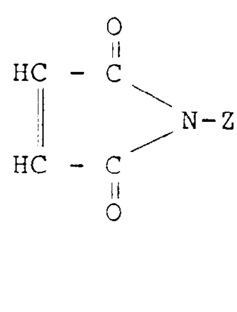

où Z désigne un groupe $(CH_2)_m$-COOR ou $-C_6H_4$-COOR, R étant un alkyle, aryle ou H, et m' un nombre entier de 1 à 17,
ou de formule

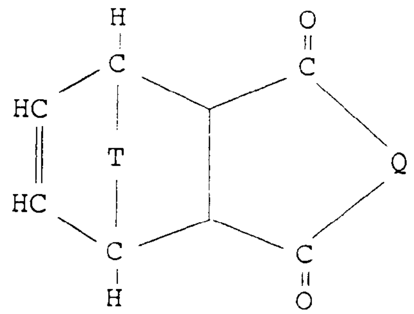

dans laquelle :
T, quand il existe, représente $-CH_2$-
Q représente l'oxygène ou un groupement >N-$C_6H_4$-COOR ou >N-$(CH_2)_m$-COOR, R étant l'hydrogène ou un groupement alkyle ou aryle, avec m 1 à 17,
sont chauffées à l'état fondu à une température supérieure à celle à laquelle fond le produits de polycondensation voulu, et comprise entre 200°C et 300°C, sous atmosphère de gaz inerte, pendant une durée de 0,5 à 10 heures.

6. Procédé suivant la revendication 5, caractérisé en ce que la température de chauffage est de 210° à 280°C.

7. Procédé suivant une des revendications 5 ou 6, caractérisé en ce que le mélange fondu, chauffé, contient 1 mole de composé insaturé pour 4 à 50 moles d'oméga amino-acide ou lactame

8. Procédé suivant la revendication 5, dans lequel le composé insaturé est l'acide acrylique ou méthacrylique.

9. Procédé suivant la revendication 5, dans lequel le composé insaturé est l'acide cinnamique, crotonique ou undécylénique.

10. Procédé suivant la revendication 5, caractérisé en ce que le composé insaturé est un acide ou ester N-maléimido hexanoique, p-benzoique, undécanique ou dodécanoique.

11. Application, d'un macromère suivant une des revendications 1 à 4 à la préparation de masses pour objets moulés, revêtements, joints d'étanchéité et autres, par réticulation catalytique, thermique ou par radiations.

12. Application d'un macromère produit suivant une des revendications 1 à 4 à la production de nouveaux polymères par leur greffage sur des polymères ou copolymères thermoplastiques ou élastomères.

13. Application suivant la revendication précédente, caractérisée en ce que le macromère est mélangé avec un polymère ou copolymère oléfinique, vinylique ou diénique, de préférence de masse moléculaire de 5000 à 300000, et le tout est chauffé à l'état fondu à une température de 190°C à 250°C avec catalyseur radicalaire.

14. Application suivant la revendication 13, caractérisée en ce que le produit formé est mélangé avec un polyamide à l'état fondu.

## Patentansprüche

1. Makromer, das eine Polyamidkette aufweist, die mit einer anderen Gruppierung abschließt, dadurch gekennzeichnet, daß sich eine Doppelbindung in einer Gruppierung befindet, die an nur eines der beiden

Enden der Polyamidkette gebunden ist, daß diese Gruppierung aus der ungesättigten Verbindung vom Typ

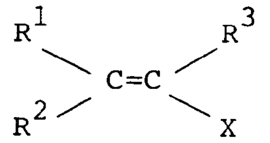

(1)

stammt, in der die Reste oder Atome $R^1$, $R^2$ und $R^3$ gleich oder verschieden sind und H, Halogen, Alkyl, Aryl (insbesondere Phenyl), Norbornyl, Thienyl, Pyrrolyl oder Furanyl darstellen, während die aktive Gruppe X sein kann:

$-(CH_2)_nCOOH$ mit n=0 bis 17;

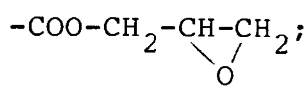

$Y-C_6H_4-COOR$, worin Y -COO-, -CONH- ist oder eventuell nicht vorhanden ist, und R H, Alkyl oder Aryl ist;

$-CH_2OH$; $-(CH_2)_mNH_2$ mit m=0 bis 18; -OH;

oder

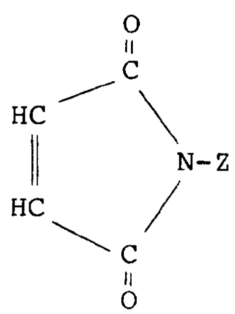

(2)

wobei z $-(CH_2)_{m'}-COOR$ oder $-C_6H_4-COOR$ darstellt, worin R Alkyl, Aryl oder H ist und m' eine ganze Zahl zwischen 1 und 17 darstellt;

oder

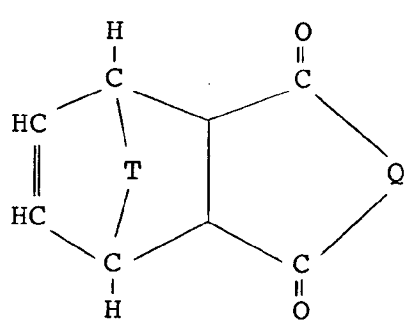

(3)

wobei in diesem Fall T $-CH_2-$ darstellt, aber entfallen kann, wobei dann die Verbindung nur aus einem Bicyclus besteht; Q ist -O-,

$>N-C_6H_4-COOR$ oder $>N-(CH_2)_{m'}-COOR$, wobei R Wasserstoff, Alkyl oder Aryl und m'= 1 bis 17 ist; und daß seine mittlere Molekularmasse 185 bis 20.000 beträgt, mit Ausnahme der Verbindung mit der Formel $CH_2=CHCO[NH(CH_2)_8CO]_nOH$, wobei n eine ganze Zahl bis 14 ist.

**2.** Makromer nach Anspruch 1, dadurch gekennzeichnet, daß es 2 bis 120 aus einer Omega-Aminosäure hervorgegangene Einheiten pro Doppelbindung aufweist.

3. Makromer nach Anspruch 1, dadurch gekennzeichnet, daß seine mittlere Molekularmasse 500 bis 10000 beträgt.

4. Makromer nach einem der Ansprüche 1 bis 3, dadurch gekennzeichnet, daß seine Schmelztemperatur zwischen 130 und 250°C, insbesondere zwischen 150 und 200°C liegt.

5. Verfahren zur Herstellung eines Makromeren nach einem der vorangehenden Ansprüche, dadurch gekennzeichnet, daß 2 bis 120 Mol einer Omega-Aminosäure oder eines Lactams und ein Mol einer ungesättigten Verbindung

der Formel $R^1R^2C=CR^3$, in der die Reste oder Atome $R^1$ bis $R^3$ gleich oder verschieden sind und H, Halogen, Alkyl, Aryl (insbesondere Phenyl), Norbornyl, Thienyl, Pyrrolyl oder Furanyl darstellen, X ist: $-(CH_2)_nCOOH$ mit n=0 bis 17;

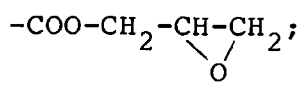

$Y-C_6H_4-COOR$, worin Y -COO-, -CONH- ist oder nicht vorhanden ist, und R H, Alkyl oder Aryl - $CH_2OH$; $-(CH_2)_mNH_2$ mit m=0 bis 18; oder -OH ist;
oder der Formel

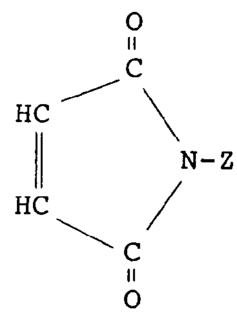

in der Z einen Rest $-(CH_2)_m-COOR$ oder $-C_6H_4-COOR$ darstellt, worbei R Alkyl, Aryl oder H und m eine ganze Zahl zwischen 1 und 17 ist;
oder der Formel

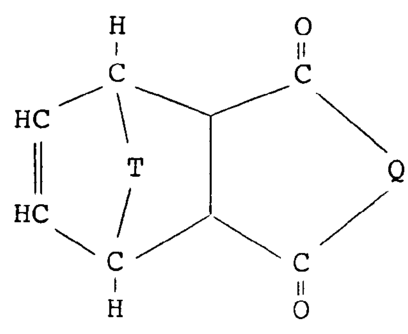

in der T, wenn vorhanden, $-CH_2-$ darstellt, Q Sauerstoff oder eine $>N-C_6H_4-COOR$ oder $>N-(CH_2)_m-COOR$-Gruppe bedeutet, wobei R H, Alkyl oder Aryl und m = 1 bis 17 ist;
in geschmolzenem Zustand unter Inertgasatmosphäre für eine Dauer von 0,5 bis 10 Stunden auf eine Temperatur oberhalb derjenigen erhitzt werden, bei der das gewünschte Polykondensationsprodukt schmilzt und die zwischen 200 und 300°C liegt.

6. Verfahren nach Anspruch 5, dadurch gekennzeichnet, daß die Erhitzungstemperatur zwischen 210 und 280°C liegt.

7. Verfahren nach einem der Ansprüche 5 oder 6, dadurch gekennzeichnet, daß das erhitzte Gemisch 1 Mol

einer ungesättigten Verbindung auf 4 bis 50 Mol einer Omega-Aminosäure oder eines Lactams enthält.

8. Verfahren nach Anspruch 5, bei dem die ungesättigte Verbindung Acryl- oder Methacrylsäure ist.

9. Verfahren nach Anspruch 5, bei dem die ungesättigte Verbindung Zimtsäure, Crotonsäure oder Undecylensäure ist.

10. Verfahren nach Anspruch 5, dadurch gekennzeichnet, daß die ungesättigte Verbindung N-Maleimido-hexanon-, -p-benzoe-, -undecan- oder -dodecansäure oder deren Ester ist.

11. Verwendung eines Makromeren nach einem der Ansprüche 1 bis 4 zur Herstellung von Formteilen, Beschichtungen, Dichtungsringen und anderen Dichtungen durch katalytische, thermische Vernetzung oder durch Bestrahlung.

12. Verwendung eines Makromeren hergestellt nach einem der Ansprüche 1 bis 4 zur Herstellung neuer Polymeren durch deren Aufpfropfen auf thermoplastische oder elastomere Polymere oder Copolymere.

13. Verwendung nach dem vorherigen Anspruch, dadurch gekennzeichnet, daß das Makromere mit einem olefinischen, vinylischen oder dienischen Polymer oder Copolymer, vorzugsweise mit einer Molekularmasse von 5.000 bis 300.000 gemischt wird, und daß das Ganze in geschmolzenem Zustand mit einem radikalischen Katalysator auf eine Temperatur zwischen 190 und 250°C erhitzt wird.

14. Verwendung nach Anspruch 13, dadurch gekennzeichnet, daß das gebildete Produkt mit einem Polyamid in geschmolzenem Zustand vermischt wird.

## Claims

1. Macromer comprising a polyamide chain terminated by another group, characterized in that there is one double bond in a group attached at only one of the ends of the polyamide chain, that group resulting from an unsaturated compound of the type

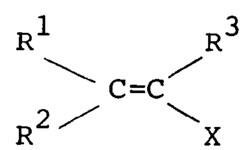

(1)

where the groups or atoms $R^1$, $R^2$ and $R^3$, similar or different are H, halogen, alkyl or aryl (phenyl in particular), norbornyl, thienyl, pyrrolyl or furanyl, the active group X being

$-(CH_2)_nCOOH$ with n=0 to 17;

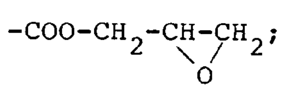

$Y-C_6H_4-COOR$, wherin Y is -COO-, -CONH- or may not exist, and R is H, alkyl or aryl;
$-CH_2OH$; $-(CH_2)_mNH_2$ with m=0 to 18; -OH;
or

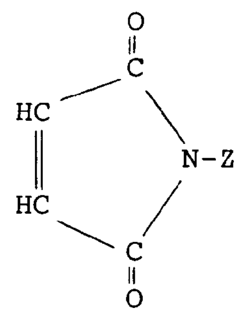 (2)

wherein Z designates a $-(CH_2)_{m'}-COOR$ or $-C_6H_4-COOR$ group, wherein R is alkyl, aryl or H and m' is an integer between 1 and 17;
or

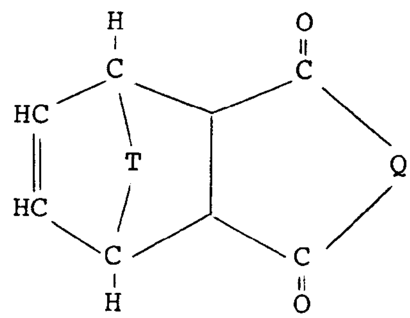 (3)

wherein T here designates $-CH_2-$, but may not exist, in which case the compound only consists of two cycles. Q represents -O-, $>N-C_6H_4-COOR$ or $>N-(CH_2)_{m'}-COOR$, R being hydrogen, alkyl or aryl and m'= 1 to 17;
and in that its average molecular weight is from 185 to 20,000, with the exception of the compound of formula $CH_2=CHCO[NH(CH_2)_8CO]_nOH$, wherin n is an integer up to 14.

2. Macromer according to claim 1, characterized in that it comprises 2 to 120 units derived from an omega amino-acid per double bond present.

3. Macromer according to claim 1, characterized in that its average molecular weight is from 500 to 10,000.

4. Macromer according to one of claims 1 to 3, characterized in that its melting point is between 130 and 250°C and especially 150 and 200°C.

5. Process for producing a macromer according to one of the preceding claims, characterized in that 2 to 120 moles of an omega amino-acid or lactame and one mole of an unsaturated compound
of formula $R^1R^2C=CR^3$ wherein the groups or atoms $R^1$ to $R^3$, similar or different, are H, halogen, alkyl, aryl (particularly phenyl), norbornyl, thienyl, pyrrolyl or furanyl, X is:
$-(CH_2)_nCOOH$ mit n=0 bis 17;

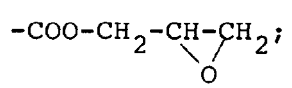

$Y-C_6H_4-COOR$, wherein Y is -COO-, -CONH- or is not present, and R being H, alkyl or aryl; $-CH_2OH$; $(CH_2)_mNH_2$ with m=0 to 18; or -OH;
or formula

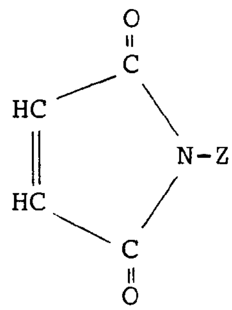

wherein Z designates a $-(CH_2)_{m'}-COOR$ or $-C_6H_4-COOR$ group, wherein R is an alkyl, aryl or H and m' an integer from 1 to 17;
or formula

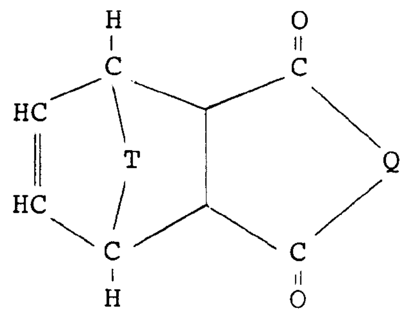

where T, if it exists, designates $-CH_2-$, Q represents -O-, $>N-C_6H_4-COOR$ or $N-(CH_2)_m-COOR$, R being H, alkyl or aryl and m=1 to 17;
are heated under inert atmosphere for a period of 0.5 to 10 hours in the molten state at a temperature above that at which the desired polycondensation product melts and which is between 200 and 300°C.

6. Process according to claim 5, characterized in that the heating temperature is from 210 to 280°C.

7. Process according to one of the claims 5 or 6, characterized in that the heated, molten mixture contains 1 mol of an unsaturated compound per 4 to 50 moles of an omega amino-acid or lactame.

8. Process according to claim 5, in which the unsaturated compound is acrylic or methacrylic acid.

9. Process according to claim 5, in which the unsaturated compound is cinnamic, crotonic or undecylenic acid.

10. Process according to claim 5, characterized in that unsaturated compound is N-maleimido hexanoic, p-benzoic, undecanoic or dodecanoix acid or ester.

11. Use of a macromer in accordance with one of the claims 1 to 4 for the production of masses for moulded objects, coatings, sealing joints and other objects, by cross-linking caused by catalysis, heat or radiations.

12. Use of a macromer in accordance with one of the claims 1 to 4 for the production of novel polymers by grafting it onto thermoplastic or elastomeric polymers or copolymers.

13. Use in accordance with the preceding claim, characterized in that the macromer is mixed with an olefinic, vinylic or dienic polymer or copolymer, preferably having a molecular weight of 5,000 to 300,000 and the entire mixture is heated in the molten state at a temperature of 190 to 250°C with a free radical catalyst.

14. Use in accordance with claim 13, characterized in that the product formed is mixed with a polyamide in the molten state.